Europäisches Patentamt

European Patent Office

Office européen des brevets

(11) Publication number:  **0 181 838**
**A2**

(19)

(12) # EUROPEAN PATENT APPLICATION

(21) Application number: **85830244.1**

(22) Date of filing: **26.09.85**

(51) Int. Cl.⁴: **G 01 B 7/28**
**G 01 B 5/20**

(30) Priority: **01.10.84 IT 2293184**

(43) Date of publication of application:
**21.05.86 Bulletin 86/21**

(84) Designated Contracting States:
**AT BE CH DE FR GB LI LU NL SE**

(71) Applicant: SPERONI S.p.A.

Sostegno di Spessa Po (Pavia)(IT)

(72) Inventor: Manelli, Carlo
Via Ugo Foscolo 3
Belgioioso (Pavia)(IT)

(72) Inventor: Bonifacini, Giovanni
Via XX Settembre 137
Belgioioso (Pavia)(IT)

(74) Representative: Zorzoli, Franco
c/o BUGNION S.p.A. Via Carlo Farini 81
I-20159 Milan(IT)

(54) Method for carrying out quick inspections in process and equipment to be used with this method.

(57) The method in reference provides the possibility of performing the geometrical control of the pieces (5) on a production line at the same operation rate as that of the plant, by means of a number of active tracing elements (3) disposed radially on an appropriate bar or bars (2) pulled along by a slide (6), the points to be measured being detected after said bar (2) has been freely introduced into the piece (5) to be inspected and the tracer points (3) have come out for the detection. Afterwards the acquired data are processed by a videographic unit (31) associated with a microcomputer (34) which compares said data with those, previously stored, of the standard piece, displaying the drawing of the latter and the results of the processing itself on the above mentioned videographic unit (31) provided with three signalling lamps referring to three different tolerance levels.

EP 0 181 838 A2

*Fig 1*

Method for carrying out quick inspections in process
and equipment to be used with this method


The present invention relates to a method for carrying
out quick inspections in process and to the equipment
to be used with this method, by which it is possible to
accomplish a precise and systematic geometrical control
of the pieces directly on the production line at the
same operation speed as that of the plant.

It is known that the present-day trend in the different
fields of production and industrial planning follows
the theory according to which only good pieces have to
be constructed and therefore the construction of pieces
susceptible of rejection that is pieces not similar to
the standard piece from the standpoint of their
geometrical quality must be avoided, that is prevented.
This is made possible by creating a more and more
increasing number of stations for the geometrical interoperative control which should be more and more upstream
with respect to the working process of the piece to be
produced.

In the machines of the present-day control stations it
is possible to distinguish a merely mechanical part
in which a detection is executed by means of bars
provided with passive tracer points, which bars,
introduced into the piece to be checked, cause the
lowering of the respective tracer point by contrast and
subsequent sliding against the inner part of the piece
itself, as well as a merely electronic part which is
used for processing, after an appropriate conversion,

- 2 -

the mechanical data detected through the displacement of said tracer point.It will be recognized however that said control stations consist of high precision equipments that are obliged to cohabit with the machine tools in the normal working environment of the latter, often without any particular protection.

The control equipments presently existing on the market allow a rather deep control of the geometrical quality of the piece being manufactured but they have some flexibility and speed limits or are too restricted as to their fields of tolerance. In fact said equipments often have some difficulties in adapting themselves to the different production lines, as these control stations are of the "destined" type and therefore they only are consistent with the specific production piece with which they have been associated and with no one else. More particularly they cannot be used with any other piece different from those corresponding to the standard piece on which the reference measurements have been detected and the tolerance limits are very narrow.Briefly such control equipments are previously initialized through a standard piece, so that they are destined for a specific manufactured article. As a result, only pieces that are similar to or compatible with the standard piece are sent on in the production line.

In this connection it should be noted that, with respect to the machines on sale, it is possible to save about 20% of the time necessary to execute the geometrical inspection and the subsequent data processing on the piece on line.

Furthermore, since the control equipment has to operate in a highly polluted environment owing to the presence of emulsions, coolants and chips, it might happen that particularly the latter would be interposed between the inner surface to be measured and the tracing elements so that the detection would be altered and would not correspond to the reference standard piece, which adversely affects the production.

Finally the machines on sale do not have tolerances adapted to ensure a flexible inspection within a given value, and therefore they are very strict when measuring and consequently they are not always reliable as regards the continuity of the production line. So it may happen that on measuring a piece that slightly deviates from the established calibration range, the equipment does not recognize it as good because it stands at the limits of the linear displacement field of the tracer points; thus the production cycle is stopped, which results in a great damage for the production rate. This occurs when the detected mechanical quantity is not finely converted into the corresponding electrical quantity that the processing system has to compare. As a result, the evaluation of the piece under examination may be not completely correct.

It should also be pointed out that the tracing elements presently in use are mainly of the sliding type, so that particular problems arise as to the compatibility between the material of which the piece to be measured is made and that of the measurement moduli, in addition to the already mentioned problem concerning the tolerance limits in the field of the linear displacement of the tracer points themselves. Due to the last mentioned problem it is compulsory that in such a configuration the axis of the piece to be measured and the axis of the measurement modulus be aligned so that no further deviations and therefore alterations in the geometrical control may occur.

Finally it should be taken into due consideration the fact that the equipments presently on sale are not of the interactive type and thus they are not always completely integrated into the working cycle of the piece and not in constant talking with the other components of the working line.

The main object of the present invention is to obviate the above mentioned drawbacks relative to the known systems by providing and making available a method for carrying out quick inspections in process, as well as an equipment to be used with this method, adapted to ensure the geometrical control of the pieces being worked and an appropriate control both of the inherent working process and of the measurement members, as well as of the members acting on the piece itself for the purpose of machining it.

Further features and advantages of the invention are disclosed in the following description; they are attained by a method for carrying out quick inspections in process characterized in that it provides the possibility of performing the geometrical control of the pieces on a production line according to a sequential procedure, by which one or more measurement bar moduli are introduced into an on-line piece, according to the number of lights with which it is equipped, said moduli being provided with at least three active tracing elements disposed radially on said bars, which are pneumatically actuated once said moduli have been positioned inside the piece under examination, after cleaning the region to be measured by means of a fluid blow, the whole sequence being controlled by an appropriate microcomputerized equipment characterized in that it not only commands, as already said, all different reciprocating motions of the measurement modulus and of the respective tracer points, but also processes the signals transmitted by the latter by suitably manipulating them through successive transformations obtained by the use of appropriate electronic means, and compares them with the previously stored data of the standard piece in order to establish in which tolerance field the piece under examination has to be placed, while also controlling the different components of the production line in the right way.

The equipment that puts the above described method into practice is characterized in that it comprises one detection device consisting of one or more measurement bar moduli, mounted on a slide, into which at least three active tracing elements are radially set, which tracing elements come out of their housing when said moduli have accomplished, through the slide, their introduction stroke into the piece to be measured, said tracer points being associated with a differential transformer, the variation of induction of which in.

consequence of the out-movement of the tracer points themselves, is transmitted in the form of an electrical signal to a second device fitted for receiving and processing data and consisting of a microcomputerized videographic unit which, making visible the data processing on a monitor together with the drawing of the piece being checked, controls that all the tracer points have come back in, sends the slide return signal and finally, through pre-arranged colored lamps as well as through said monitor, displays the result of the processing, i.e. shows whether the geometrical levels are in conformity with, or eventually at the limit of, or even out of tolerance with respect to the standard piece seen in the drawing, while suitably controlling all the different components of the production line, the control equipment itself being included too.

Advantageously said tracer points are at least in the number of three, for reasons of a geometrical nature in order to define a precise circumference and, in addition, they are of the active type for the purpose of avoiding sliding problems and extending their field of adaptation to the different pieces to be examined.

Further features and advantages of the invention will become more apparent from the detailed description of a preferred embodiment of the method for carrying out quick inspections in process and of the equipment to be used with said method, given hereinafter by way of example only with reference to the accompanying drawings in which:

- Fig. 1 is a general view of the control equipment and the respective measurement modulus provided with
tracer points;

- Fig. 2 shows a particular configuration in which
five tracer points have been radially disposed on the
cylindrical measurement modulus;

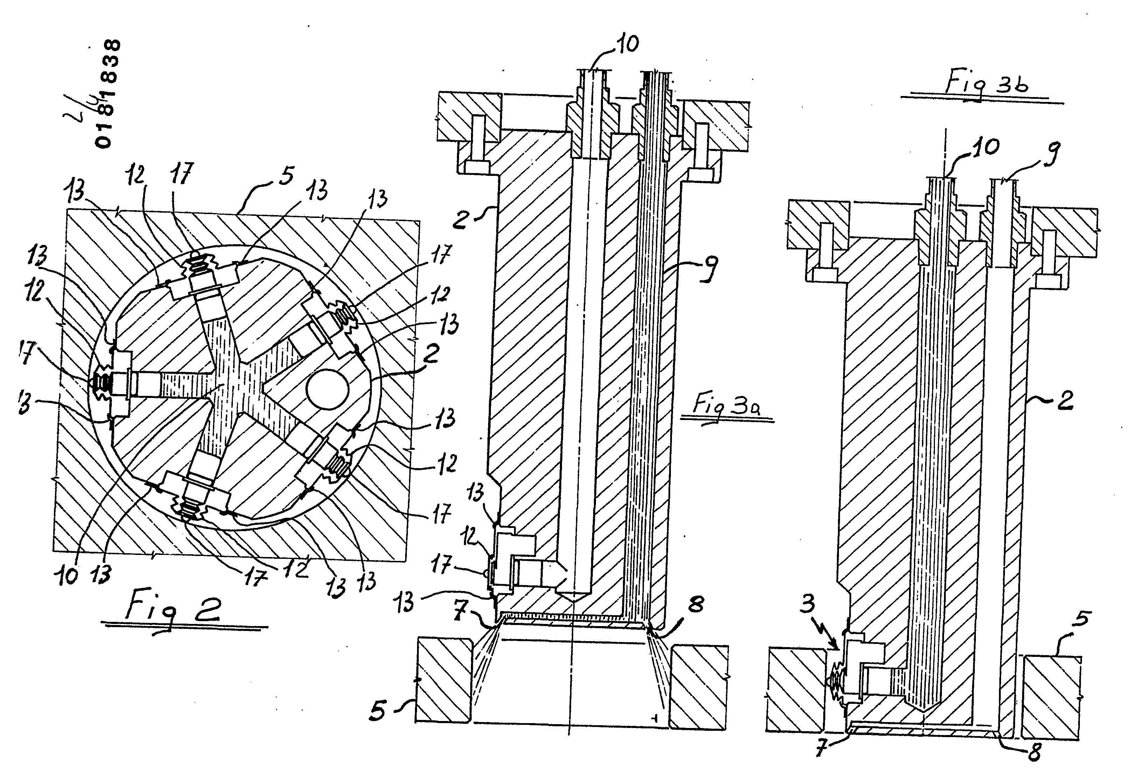

- Figs. 3a and 3b show two steps in succession and
particularly Fig. 3a shows how a cleaning air jet is
directed towards the region to be measured, through
appropriate nozzles and Fig. 3b shows how the tracing
element always driven by an air jet is put in place;

- Fig. 4 is a cut away view of the tracing element;

- Fig. 5 is a block diagram relative to the processing
system as a whole.

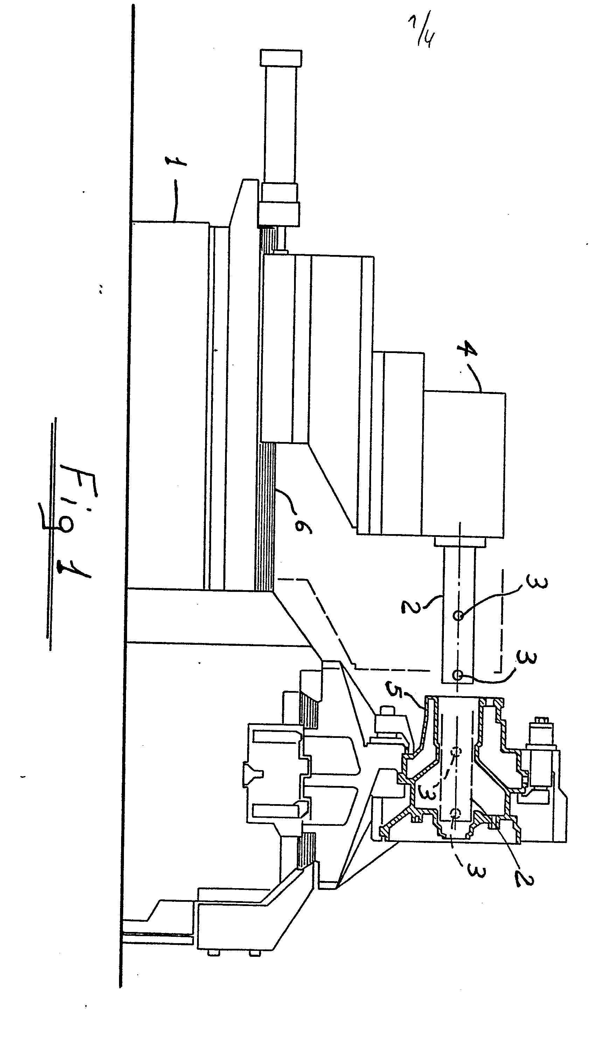

Referring to the drawings and particularly to Fig. 1,
a control equipment for a production line has been
generally indicated at 1. As to its essential members,
said equipment comprises a measurement modulus 2
consisting of a bar provided with tracing elements 3
and mounted on a support 4 movable towards the piece
to be controlled 5 by means of a slide 6, the assembly
being connected to a computerized videographic unit
31 not shown in the figure. The tracing elements must
be at least three in order to ensure the centering of
the circle but in Fig. 2 five of them are shown in
order to increase the precision degree in the case of
particularly complicated pieces for example.

Since these equipments directly work in the production
place, the element to be measured is expected to be
eventually polluted by swarfs. So two ducts have been
housed inside the body of the measurement modulus 2.

The former, identified at 9, is used for directing fluid under pressure towards the nozzles 7 and 8 disposed in the head of the modulus before the latter enters the piece, in order to clean the region to be examined. The latter, identified at 10, is used for the delivery of air under pressure, which air controls the issue of the movable members 11 relative to the corresponding tracing elements 3 after the modulus 2 has been positioned inside the piece to be measured 5.

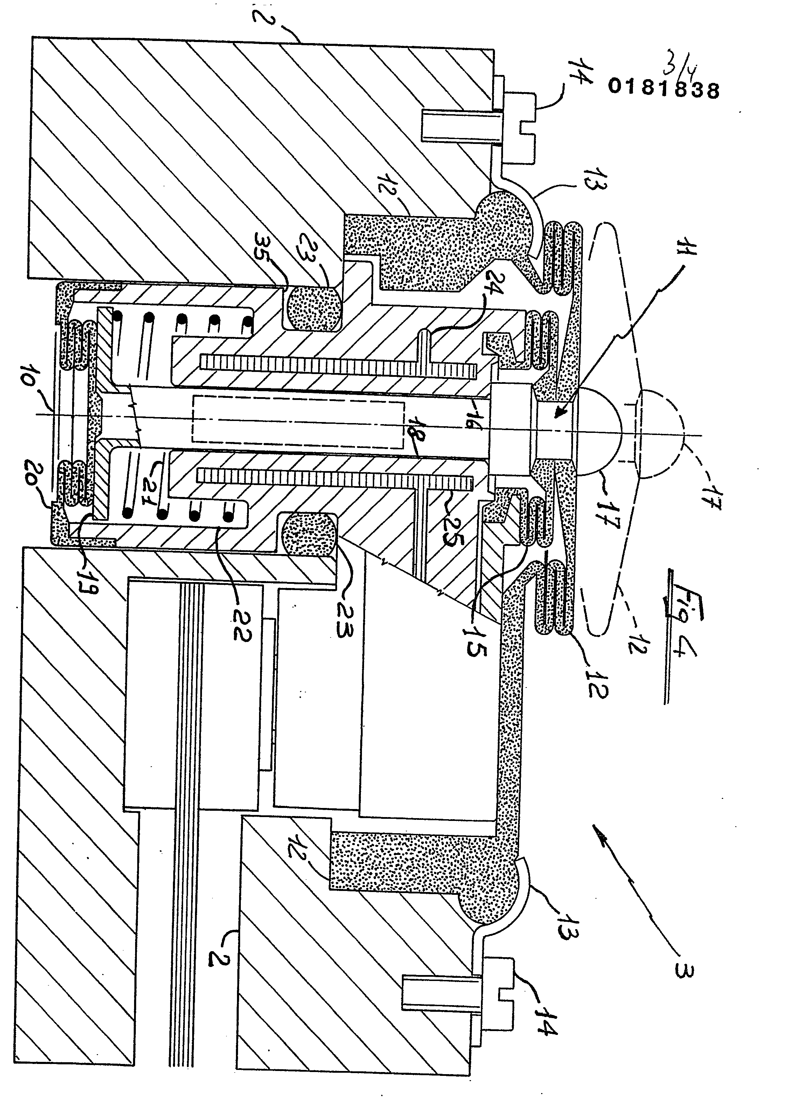

Referring particularly to Fig. 4, the measurement modulus 2 provides a series of housings into which the tracing elements 3 are placed. Each tracing element 3 consists of a containing body 35 for the movable member 11. For a complete isolation and protection both of the movable member 11 and of the transducer member controlling the displacements of the latter, as will become more clear in the following, one protection sleeve 12 of the folding type and made of rubber is provided; it is engaged with the modulus 2 by an annular member 13 fastened thereto by means of screws 14; a second sleeve 15 is interposed between the outer portion of the movable member 11 and the outer portion of the containing body 35; it is identical to the first sleeve and shaped in the same manner. Finally, a third protection sleeve 20 similar to the preceding ones is interposed between a circular plate 19 located at the inner end of a rod 16 being part of the movable member 11 and the inner portion of the containing body 35. The movable member 11 is slidable, together with its rod 16, inside a duct 18 obtained within the containing body 35 and is outwardly provided with a hemispherical tracing head 17. The rod 16 is axially hollow and the above mentioned air duct 10 is connected to said rod in the middle thereof. A spring 21 the lower end of which rests on the circular plate 19, acts as a dampening element; its stroke is contained in a suitable chamber 22. An O-ring 23 is positioned in the median part of said rod 16 where two windings 24 and 25 of a differential transformer not shown in the figure are located too.

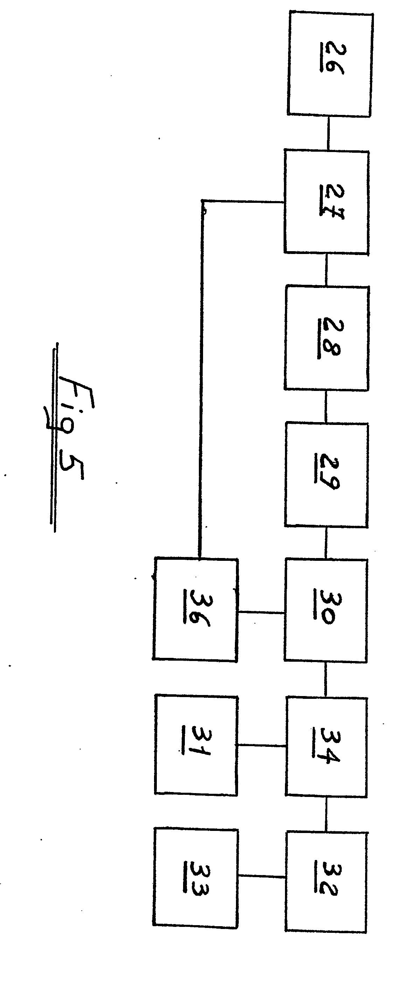

The stroke of the rod 16 causes a variation of induction in the above mentioned windings. The movable members 11, in combination with said differential transformer, form a transducer 26, as seen in Fig. 5. In this figure it is also shown a block 27 for transmitting the signals coming from different tracer points, a block 28 for manipulating the signals and put them on line, a block 29 for amplifying them and a conversion block 30. A microcomputer 34 is provided for the control of the above blocks. Among other things it sends appropriate data to a videographic unit 31 as will be more apparent in the following and also controls all mechanical commands of the above described mechanical detection apparatus.

After describing the equipment mainly from a structural point of view, its operation according to the invention is the following.

First of all the equipment must be set to zero, storing the data detected from a standard piece. This operation takes place in the following manner.

A standard piece is first caused to pass before the equipment on the production line. Then the bar modulus 2 is caused to slide, by means of the slide 6, towards the pieces to be measured. During this step the microcomputer first carries out the check of t h e tracing elements 3 for the purpose of being sure of their good operation. Afterwards, close to the piece to be measured, it causes the fluid under pressure coming from the duct 9 to flow out of the nozzles 7 and 8 so that it cleans the region concerned with the measurement, should some swarfs be present there.

At this point the bar modulus 2 is introduced into the piece to be examined. The movable members 11 are actuated to carry out the real inspection. Three points at least are examined by means of as many movable members 11 on each outer or inner diameter because the geometrical law that only one circumference can pass through three points has been taken into consideration. The knowledge of the position of three points on each circumference allows the software determination of the coordinates of the center and the calculation of the values of the distance between the centers. Furthermore it allows the acceptance of possible misalignements between the axis of modulus 2 and that of the piece to be measured.

The air under pressure coming from the duct 10 is admitted into the axial drilling of each rod 16 that moves upwardly so that its hemispherical head 17 is brought into contact with the inner surface of the piece to be measured 5. This movement also involves the expansion of the protection bellows or sleeves 12, 15 that follow the head 17 of the rod 16 during its raising. Atthe same time the sleeve 20 rises too as it is associated with the circular plate 19 which therefore compresses the spring 21.

The raising of the rod 16, the compression of the spring 21 and the expansion of the bellows 12, 15 and 20 take place in degrees by means of a graduated force as well as their return to a rest condition. The upward movement of the rod 16 causes a variation in the linkage between the windings 24 and 25 of the differential transformer. Thus an electrical signal is determined which is represented by a variation of induction. Since this electrical signal must at the same time correspond to a determined linear displacement of the rod 16, it is suitably manipulated for the purpose.

In fact, in order to be sure to operate always in the linear field, this electrical value is associated with a specific stroke interval. By means of these intervals it is possible to classify the tolerances according to particular assemblages forming tables that are then used in processing.

However it is necessary to be sure that a millimeter of the transducer stroke corresponds to a millivolt. For the purpose the reference point is given for example by the interval -500 and + 500 with respect to the zero of the transducer. The measurement of - 500 is carried out and this value will correspond to - 500 millivolts by means of a suitable analog multiplier not shown in the figure and located in the block 28 called multibase. In this way the millimeter of the stroke will always correspond to a millimeter and the tables will only intervene to correct the intermediate positions. In addition, the tables will be more useful as a correspondence between the mechanical and electrical values will  exist in each point of the stroke of the rod 16.

The block 28, besides being an analog multiplier, also acts as a current generator. In more detail, it must convert the tension signal into a current signal so that the corresponding measurement is made in any case surely independent, with an appropriate frequency value, even if a possible resistance variation occurs, due to the thermal oscillations that can cause a variation in the sizes of the rod 16 and consequently in the inductance value.

The block 27 represents the multiplexer for the transducers and allows that up to nine transducers may be connected together.  A standard channel 36 starts from the multiplexer 27 and directly reaches the block 30 that is an analog-to-digital converter. This standard channel 36 uses the reference signal of the transducer feeding and crosses some amplifying channels not shown in the figures that are identical to those crossed by the signals of transducers 3. For that reason a variation on this standard channel corresponds to a variation of the transducer channels. As a result, it acts as a

comparator channel and a reading in a different scanning, that is greater or smaller, detected on the channels of the transducers 3 is interpreted as an error and therefore corrected with a substraction or an addition. This is due to the fact that all alterations suffered by the standard channel are supposed to be identical to those of the transducer channels. A classical situation is for example represented by the thermal drift or a variation on the feeding of the transducers.

The scanning is carried out by the microcomputer 34 that performs this reading function starting from the cards and passing then to the diameter and finally to the transducer. The display of the scanning result appears on the videographic unit 31 to which the computer 34 is connected and which is usually a monitor-type unit.

As already said, the computer, being interactive, can have a talk with other numeric-control machines 33 through the block 32 representing the buffer for the incoming and outcoming data of said computer 34.

The block 29 is a conditioner for signals and is used for amplifying them before they are incorporated into the analog-to-digital converter 30 and rectified. Said rectification takes place not through a bridge but through a synchronous detector. In fact with a bridge system it is not possible to obtain the zero volt indication in the vicinity of the zero.

As described hereinbefore, both the method and the pertaining equipment attain the intended purposes.

- 14 -

In fact it is possible to achieve a high quality control
even if polluting elements are present on the piece
and in a lapse of time definitely more compatible with
the normal operation time of a production line.

Obviously both the method and the equipment described
above are not intended to comprise a limitation and
many modifications and variations can be carried out
within the scope of the invention itself.

C L A I M S

1. A method for carrying out quick inspections in process, characterized in that said method provides the possibility of performing the geometrical control of the pieces (5) on a production line according to a sequential procedure that takes place as follows:

a) initial setting to zero of the equipment (1) with respect to the data delivered by a standard piece following the same procedure steps hereinafter chronologically specified;

b) starting of the slide (6) equipped with one or more measurement bar moduli (2) which are provided with at least three active tracing elements (3) disposed radially on said bars (2), as soon as the standard piece is positioned before said measurement modulus (2);

c) operative testing of the tracer points (3);

d) flowing of fluid under pressure out of appropriate nozzles (7 and 8) located at the end of said bars (2), when the latter are close to the region to be controlled, in order to make this region clear of possible work swarfs;

e) introduction of the bars (2) into the piece (5) to be controlled;

f) actuation and issue of the tracing elements (3) by means of air under pressure;

g) detection of the required data by converting them into an electrical signal;

h) withdrawal of the bars (2) after removal of the tracer points (3);

i) processing of the received signals by comparing them with the stored ones;

j) displaying, on a monitor (31), of the drawing of the piece and of a table where the detected dimensions and the tolerance dimensions are disposed side by side, the latter being associated with three colored lamps each indicating the tolerance field within which the piece has been placed;

k) possible control operation and/or replacement of the tool of the operating machine associated with the equipment (1), should a working anomaly be found;

l) repeating of the procedure after a number of pieces (5), this number having to be established;

m) placing of at least three tracer points (3) on each bar (2) in order to ensure the centering of the circle of the piece(5) to be measured and to allow the tolerance of possible misalignements between the axis of the latter and the axis of the measurement modulus (2).

2. An equipment to be used with the method according to claim 1, characterized in that it comprises one detection device consisting of one or more measurement bar moduli (2) mounted on a slide (6) into which at least three active tracing elements (3) are radially set, which tracing elements (3) come out of their housing by means of a jet of compressed air and cooperate, for the data detection, with a differential transformer through which the data detected as a result of the issue of the tracer points (3) themselves are converted into an electrical signal, in the form of a variation of induction, and then sent to a second processing device (34) of the electronic type associated with the above mentioned modulus (2) and subsequently the result is displayed through a monitor (31) and through colored lamps the colors of which represent the different tolerance fields in which the measured piece has been placed.

3. The equipment according to claim 2 characterized in that said electronic device is a microcomputer (34).

4. The equipment according to claim 1 characterized in that the processing of the signal transmitted by each tracer point (3) and then converted into an electrical signal is carried out by exploiting a previously arranged linearity table, in which the values of the electrical signals are divided into determined linear intervals through which it is then possible to arrange the tolerances into particular assemblages constituting said tables.

5. The equipment according to claim 1 characterized in that the converted signal has been reproduced in the form of current and not of voltage.

6. The equipment according to claim 1 characterized in that the signals of the transducer channels are systematically compared with the signal of the standard channel (36).

7. The equipment according to claim 1 characterized in that the tracer points (3) are of the active type.

0181838

Fig 1

Fig 2

Fig 3a

Fig 3b

0181838

3/4 0181838

Fig 4

0181838

_Fig 5_